# EUROPÄISCHE PATENTSCHRIFT

(11) **EP 0 792 899 B1**
(45) Veröffentlichungstag und Bekanntmachung des Hinweises auf die Patenterteilung: **02.05.2003**
(21) Anmeldenummer: 97102544.0
(22) Anmeldetag: 17.02.1997
(51) Int. Cl.: C08G 18/75, C08G 18/08

(54) **In Wasser lösliche oder dispergierbare Polyurethanharnstoffe, ein Verfahren zu deren Herstellung und ihre Verwendung zur Beschichtung beliebiger Substrate**
Water-soluble or dispersible polyurethane-ureas, preparation process thereof and their use as coatings for various substrates
Polyuréthanes solubles ou dispersables dans l'eau, leur procédé de préparation et leur utilisation pour le revêtement de substrats disvers

(30) Priorität: 01.03.1996 DE 19607853; 26.03.1996 DE 19611850
(43) Veröffentlichungstag der Anmeldung: 03.09.1997
(73) Patentinhaber: BAYER AG, 51368 Leverkusen (DE)
(72) Erfinder: Nachtkamp, Klaus, Dr., 40593 Düsseldorf (DE); Wilmes, Oswald, Dr., 51061 Köln (DE); Arning, Eberhard, Dipl.-Ing., 41564 Kaarst (DE); Roschu, Rolf, Dipl.-Ing., 47877 Willich (DE)

(56) Entgegenhaltungen:
- EP-A- 0 157 291
- DE-A- 19 506 736
- DE-A- 19 517 185

## Beschreibung

Die Erfindung betrifft neue Dispersionen von Polyurethanpolyharnstoffen, welche als wesentliche Bausteine 1-Methyl-2,4- und/oder -2,6-diisocyanatocyclohexan in über Urethan- und Harnstoffgruppen eingebauter Form enthalten, ein Verfahren zu deren Herstellung sowie ihre Verwendung in Lacken und Beschichtungsmitteln.

Wäßrige Bindemittel auf Basis von hydrophil modifizierten Polyurethanharnstoffen sind bekannt (vgl. z.B. Houben-Weyl, Methoden der organ. Chemie, 4. Aufl., Band E 20, S. 1659 (1987) bzw. J.W. Rosthauser, K. Nachtkamp in "Advances in Urethane Science and Technology", K.C. Frisch and D. Klempner, Editors, Vol. 10, S. 121-162 (1987), D. Dietrich, K. Uhlig in Ullmann's Encylopedia of Industrial Chemistry, Vol A 21, S. 677 (1992).

Die bekannten wäßrigen Dispersionen bzw. Harzlösungen führen in der Regel zu Lacken und Beschichtungen mit einem hochwertigen Eigenschaftsniveau, die je nach Zusammensetzung für unterschiedlichste Anwendungen geeignet sind. Das Spektrum erstreckt sich von harten, zähelastischen und abriebfesten Lackfilmen, wie sie z.B. zur Fußbodenbeschichtung erforderlich sind, bis hin zu weichen, hochelastischen Lackfilmen, die für Textilbeschichtungen und Klebstoffe geeignet sind.

Obwohl der Stand der Technik eine Vielzahl unterschiedlicher Polyurethandispersionen umfaßt, die Beschichtungen mit unterschiedlichsten Eigenschaften liefern, sind bisher PUR-Dispersionen, die ohne Zusatz von Filmbildehilfsmittel bei Raumtemperatur zu homogenen, rißfreien und gleichzeitig sehr harten Beschichtungen trocknen, nicht bekannt.

Es war daher die Aufgabe der Erfindung, solche in Wasser lösliche oder dispergierbare Polyurethane zur Verfügung zu stellen, die folgende Vorteile in sich vereinen:
1. Die in Wasser gelösten oder dispergierten Polyurethane sollten Filmbildungstemperaturen unterhalb von Raumtemperatur (≤ 20°C) aufweisen.
2. Die in Wasser gelösten oder dispergierten Polyurethane sollten zu harten Beschichtungen auftrocknen, deren Härte gemäß DIN 53 157 (Pendelhärte nach König) bei ≥ 100 Sekunden liegt.
3. Die in Wasser gelösten oder dispergierten Polyurethane sollten keinen Zusatz von Filmbildehilfsmitteln enthalten.

Jetzt wurde überraschend gefunden, daß Beschichtungen, die aus wäßrigen Dispersionen von Polyharnstoffpolyurethanen, die als wesentliche Aufbaukomponente 1-Methyl-2,4- und/oder -2,6-diisocyanatocyclohexan in über Urethan- und über Harnstoffgruppen eingebauter Form enthalten, erhalten wurden, neben einem hochwertigen Eigenschaftsniveau eine im Vergleich zu den bekannten Systemen hohe Pendelhärte bei niedriger Mindestfilmbildungstemperatur aufweisen ohne daß ein Filmbildehilfsmittel erforderlich ist. Eine hohe Pendelhärte bei niedriger Mindestfilmbildungstemperatur wird in vielen Anwendungsbereichen von wäßrigen Lackbindemitteln gefordert. So ist es beispielsweise von Vorteil, daß die Mindestfilmbildungstemperatur von wäßrigen Polyharnstoffurethanen unterhalb von Raumtemperatur liegt, um nicht auf die Verfilmung fördernde Stoffe wie organische Lösemittel ohne Weichmacher zurückgreifen zu müssen, sondern rein wäßrige Systeme applizieren zu können. Parallel dazu ist oft eine Beschichtung hoher Pendelhärte gewünscht, um mit umweltfreundlichen, rein wäßrigen Bindemitteln Anwendungen zu erschließen, wo harte, abriebfeste Lackfilme gefordert werden.

Gegenstand der Erfindung sind wäßrige Polyurethanharnstoffdispersionen, die ohne Zusatz von Filmbildehilfsmitteln Filmbildungstemperaturen von ≤ 20°C aufweisen, bei Raumtemperatur zu Filmen mit einer Härte gemäß DIN 53 157 (Pendelhärte nach König) von ≥ 100 Sekunden trocknen und deren Festkörper 15-70 Gew.-% Struktureinheiten der Formel (I) 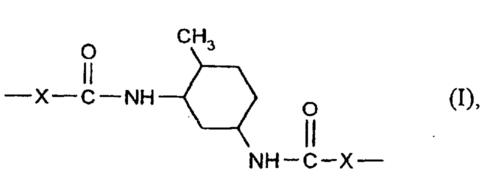 und/oder der Formel (II) 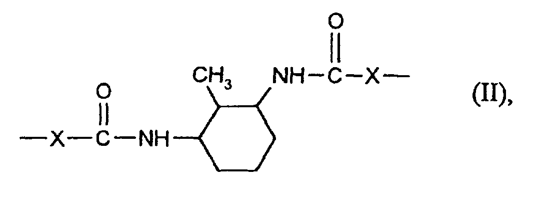 wobei -X- für -O- und/oder -NA- steht mit A = H oder -(CH₂)ₙ-B- mit B = H oder X und n = 2 oder 3
und einen Gehalt an Urethangruppen (berechnet als -NH-CO-O-, Molekulargewicht 59) von 7 bis 20 Gew.-% sowie einen Gehalt an Harnstoffgruppen (berechnet als 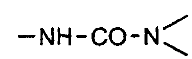 , Molekulargewicht 57) von 5 bis 18 Gew.-% aufweist, enthalten.

Ein weiterer Gegenstand der Erfindung ist ein Verfahren zur Herstellung der wäßrigen Polyurethanharnstoffdispersionen, die ohne Zusatz von Filmbildehilfsmitteln Filmbildungstemperaturen von ≤ 20°C aufweisen, bei Raumtemperatur zu Filmen mit einer Härte gemäß DIN 53 157 (Pendelhärte nach König) von ≥ 100 Sekunden trocknen und deren Festkörper 15-70 Gew.-% Struktureinheiten der Formel (I) 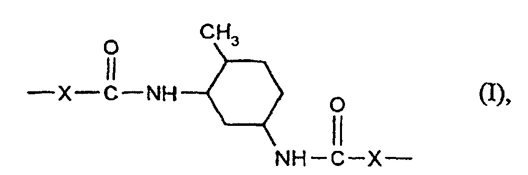 und/oder der Formel (II) 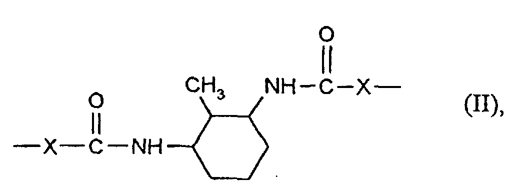 wobei -X- für -O- und/oder -NA- steht mit A = H oder -(CH₂)ₙ-B- mit B = H oder X und n = 2 oder 3 und einen Gehalt an Urethangruppen (berechnet als -NH-CO-O-, Molekulargewicht 59) von 7 bis 20 Gew.-% sowie einen Gehalt an Harnstoffgruppen (berechnet als 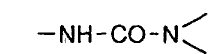 , Molekulargewicht 57) von 5 bis 18 Gew.-% aufweist, enthalten, dadurch gekennzeichnet, daß man
A) 20 bis 60 Gew.-% einer Polyisocyanat-Komponente, bestehend zumindest zu 50 Gew.-% aus 1-Methyl-2,4- und/oder -2,6-diisocyanatocyclohexan und gegebenenfalls zum Rest aus anderen organischen Polyisocyanaten des Molekulargewichtsbereiches 140 bis 1 500 mit
B) 20 bis 60 Gew.-% einer Polyolkomponente, bestehend aus einem oder verschiedenen Polyolen des Hydroxylzahlbereichs 25 bis 350 und
C) 2 bis 12 Gew.-% einer (potentiell) ionischen Aufbaukomponente aus mindestens einer Verbindung mit mindestens einer gegenüber NCO-Gruppen reaktionsfähigen Gruppe und mindestens einer, gegebenenfalls zumindestens teilweise neutralisiert vorliegenden, zur Salzbildung befähigten Gruppe und gegebenenfalls
D) 0 bis 12 Gew.-% einer nichtionisch-hydrophilen Aufbaukomponente, bestehend aus mindestens einer im Sinne der Isocyanat-Additionsreaktion mono- oder difunktionellen, mindestens eine hydrophile Polyetherkette aufweisenden Verbindung
   und/oder
E) 0 bis 15 Gew.-% eines oder mehrerer mehrwertiger Alkohole mit 2 bis 4 Hydroxylgruppen, Molekulargewichtsbereich 62 bis 250
   und/oder
F) 0 bis 15 Gew.-% eines oder mehrerer (cyclo)aliphatischer Polyamine mit 2 bis 3 Aminogruppen, Molekulargewichtsbereich 60 bis 300,
   und/oder
G) 0 bis 10 Gew.-% kettenabbrechender Verbindungen, ausgewählt aus der Gruppe der Monoamine, Alkanolamine und Ammoniak
zur Reaktion bringt, wobei sich die genannten Prozentangaben zu 100 ergänzen.

Gegenstand der Erfindung ist auch die Verwendung dieser wäßrigen Polyurethanharnstoffdispersionen zur Herstellung von Lacken und Beschichtungen.

Das Polyharnstoffpolyurethan ist ein Umsetzungsprodukt von
A) 20 bis 60 Gew.-% einer Polyisocyanat-Komponente, bestehend zumindest zu 50 Gew.-% aus 1-Methyl-2,4- und/oder -2,6-diisocyanatocyclohexan und. gegebenenfalls zum Rest aus anderen organischen Polyisocyanaten des Molekulargewichtsbereiches 140 bis 1 500,
B) 20 bis 60 Gew.-% einer Polyolkomponente, bestehend aus einem oder verschiedenen Polyolen des Hydroxylzahlbereichs 25 bis 350
   und
C) 2 bis 12 Gew.-% einer (potentiell) ionischen Aufbaukomponente aus mindestens einer Verbindung mit mindestens einer gegenüber NCO-Gruppen reaktionsfähigen Gruppe und mindestens einer, gegebenenfalls zumindestens teilweise neutralisiert vorliegenden, zur Salzbildung befähigten Gruppe und gegebenenfalls
D) 0 bis 12 Gew.-% einer nichtionisch-hydrophilen Aufbaukomponente, bestehend aus mindestens einer im Sinne der Isocyanat-Additionsreaktion mono- oder difunktionellen, mindestens eine hydrophile Polyetherkette aufweisenden Verbindung
   und/oder
E) 0 bis 15 Gew.-% eines oder mehrerer mehrwertiger Alkohole mit 2 bis 4 Hydroxylgruppen, Molekulargewichtsbereich 62 bis 250
   und/oder
F) 0 bis 15 Gew.-% eines oder mehrerer (cyclo)aliphatischer Polyamine mit 2 bis 3 Aminogruppen, Molekulargewichtsbereich 60 bis 300,
   und/oder
G) 0 bis 10 Gew.-% kettenabbrechender Verbindungen, ausgewählt aus der Gruppe der Monoamine, Alkanolamine und Ammoniak,
wobei sich die genannten Prozentangaben zu 100 ergänzen.

Zu den Ausgangskomponenten B) gehören insbesondere die aus der Polyurethanchemie an sich bekannten höhermolekularen Polyhydroxylverbindungen des Molekulargewichtsbereichs 300 bis 5 000, vorzugsweise 500 bis 3 000 wie z.B.
1) die in der Polyurethanchemie an sich bekannten Dihydroxypolyester aus Dicarbonsäuren, z.B. Bernsteinsäure, Adipinsäure, Korksäure, Azelainsäure, Sebacinsäure, Phthalsäure, Isophthalsäure, Terephthalatsäure, Tetrahydrophthalsäure usw. und Diolen wie z.B. Ethylenglykol, Propandiol-1,2, Propandiol-1,3, Diethylenglykol, Butandiol-1,4, Hexandiol-1,6, Octandiol-1,8, Neopentylglykol, 2-Methylpropandiol-1,3, oder die verschiedenen isomeren Bishydroxymethylcyclohexane;
2) die in der Polyurethanchemie an sich bekannten Polylactone wie z.B. die auf den obengenannten zweiwertigen Alkoholen gestarteten Polymerisate des ε-Caprolactons;
3) die in der Polyurethanchemie an sich bekannten Polycarbonate, wie sie durch Umsetzung beispielsweise der obengenannten Diole mit Diarylcarbonate oder Phosgen zugänglich sind;
4) die in der Polyurethanchemie an sich bekannten Polyether, wie sie z.B. die unter Verwendung von zweiwertigen Startermolekülen, wie Wasser, den obengenannten Diolen oder 2 NH-Bindungen aufweisenden Aminen hergestellten Polymerisate bzw. Mischpolymerisate des Tetrahydrofurans, Styroxids, Propylenoxids, Ethylenoxids, der Butylenoxide oder des Epichlorhydrins, insbesondere des Propylenoxids und gegebenenfalls Ethylenoxids. Ethylenoxid wird gegebenenfalls anteilmäßig mitverwendet, jedoch mit der Maßgabe, das das resultierende Polyetherdiol maximal 10 Gew.-% an Ethylenoxideinheiten enthält. Vorzugsweise werden solche Polyetherdiole verwendet, die ohne Mitverwendung von Ethylenoxid, d.h. insbesondere unter ausschließlicher Verwendung von Propylenoxid und Tetrahydrofuran erhalten wurden.

Neben diesen höhermolekularen difunktionellen Verbindungen kann die Komponente B) auch tri- oder höherfunktionelle Polyhydroxylverbindungen der genannten Art, insbesondere Polyetherpolyole aufweisen, deren Molekulargewicht innerhalb der genannten Grenzen liegt, und die unter (Mit)Verwendung von höherfunktionellen Ausgangsmaterialien wie beispielsweise Trimethylolpropan, Glycerin oder Ethylendiamin erhalten worden sind.

Auch die Verwendung von Polyetherpolyaminen des genannten Molekulargewichtsbereichs, beispielsweise solchen wie durch Überführung der Hydroxylgruppen der beispielhaft genannten Polyetherpolyole in primäre Aminogruppen erhalten werden, ist grundsätzlich möglich, allerdings weniger bevorzugt.

Die Komponente A) besteht aus mindestens einem organischen Polyisocyanat des Molekulargewichtsbereichs 140 bis 1 500, vorzugsweise 168 bis 318, mit der Maßgabe, daß sie zu mindestens 50, vorzugsweise mindestens 75 und besonders bevorzugt zu 100 Gew.-% aus 1-Methyl-2,4-diisocyanatocyclohexan und/oder 1-Methyl-2,6-diisocyanatocyclohexan besteht. Bei diesem erfindungswesentlichen Diisocyanat bzw. Diisocyanatgemisch handelt es sich vorzugsweise um das zuerst genannte 2,4-isomere Diisocyanat oder um dessen technische Gemische mit bis zu 35 Gew,.%, bezogen auf Gemisch, des letztgenannten 2,6-isomeren Diisocyanats. Bei diesen erfindungswesentlichen Diisocyanaten handelt es sich um literaturbekannte Substanzen. Ihre Herstellung gelingt auf besonders elegante Weise durch die in der DE-A P 44 12 327 beschriebene Gasphasenphosgenierung.

Neben den letztgenannten erfindungswesentlichen Diisocyanaten kann die Komponente A) auch weitere Polyisocyanate des genannten Molekulargewichtsbereichs enthalten. Beispielhaft genannt seien Hexamethylendiisocyanat (HDI), 1-Isocyanato-3,3,5-trimethyl-5-isocyanatomethylcyclohexan (IPDI), 2,4- und/oder 2,6-Diisocyanatotoluol (TDI), 4,4'-Diisocyanatodicyclohexylmethan (H₁₂MDI) und 4,4'-Diisocyanatodiphenylmethan (MDI). Die Polyisocyanatkomponente A) kann auch, allerdings weniger bevorzugt, an sich bekannte höherfunktionelle Lackpolyisocyanate auf HDI-, IPDI- und/oder TDI-Basis enthalten.

Die Komponente C) besteht aus mindestens einer (potentiell) ionischen Verbindung mit mindestens einer gegebenüber Isocyanatgruppen reaktionsfähigen Gruppe.

Vorzugsweise handelt es sich bei diesen Verbindungen um mindestens eine, vorzugsweise eine oder zwei Hydroxyl- oder Aminogruppen aufweisende Carbonsäuren oder um Salze derartiger Amino- bzw. Hydroxycarbonsäuren. Geeignete derartige Säuren sind beispielsweise 2,2-Bis(hydroxymethyl)alkancarbonsäuren wie Dimethylolessigsäure, 2,2-Dimethylolpropionsäure, 2,2-Dimethylbuttersäure oder 2,2-Dimethylolpentansäure, Dihydroxybernsteinsäure, Hydroxypivalinsäure oder. um Gemische derartiger Säuren. Vorzugsweise wird als Komponente C) Dimethylolpropionsäure und/oder Hydroxypivalinsäure verwendet. Ebenfalls möglich, jedoch weniger bevorzugt, ist die Verwendung von gegebenenfalls Ethergruppen aufweisenden Sulfondiolen der in US-A 4 108 814 beschriebenen Art als anionische Aufbaukomponente C). Die freien Säuregruppen, insbesondere Carboxylatgruppen stellen die vorstehend genannten "potentiell anionischen" Gruppen dar, während es sich bei den durch Neutralisation mit Basen erhaltenen salzartigen Gruppen, insbesondere Carboxylgruppen um. die vorstehend angesprochenen "anionischen" Gruppen handelt.

Ebenfalls als Komponente C) einsetzbar sind im Sinne der Isocyanatpolyaditionsreaktion mono- oder difunktionelle Verbindungen mit eingebauten tertiären Aminstickstoffatomen wie sie in DE-A 2 651 505 oder 2 019 324 beschrieben sind, die nach erfolgtem Aufbau des Polyurethans durch Quaternierung und/oder Neutralisation in die entsprechenden Ammoniumionen überführt werden. Geeignete derartige Amine sind die in DE-A 2 651 505 genannten, vorzugsweise N-Alkyldiethanolamine wie beispielsweise N-Methyl-diethanolamin, oder tertiären Aminstickstoff aufweisende Glykole, der in DE-A 2 019 324 beschriebenen Art wie z.B. 2-Ethyl-2-dimethylamino-methyl-1,3-propandiol, 2-Ethyl-2-diethylaminomethyl-1,3-propandiol, 2-Ethyl-2-dibutylaminomethyl-1,3-propandiol, 2-Methyl-2-dimethylaminomethyl-1,3-propandiol, 2-Methyl-2-diethylaminomethyl-1,3-propandiol, 2-Methyl-2-dibutylaminomethyl-1,3-propandiol.

Die tertiärem Aminogruppen stellen potentiell kationische Gruppen dar, die sich z.B. mit den in DE-A 2 651 505 zitierten Quaternierungsmitteln bzw. Säuren in kationische Gruppen überführen lassen.

Die gegebenenfalls mitzuverwendende Komponente D) besteht aus mindestens einer nichtionisch-hydrophilen Verbindung, die pro Molekül eine oder zwei gegenüber Isocyanatgruppen reaktionsfähige Gruppen, insbesondere Hydroxyl- oder Aminogruppen aufweist. Die Polyetherketten dieser Verbindungen bestehen zumindest zu 80 Gew.-% aus Ethylenoxideinheiten, wobei neben diesen, den gemachten Ausführungen entsprechend, auch Propylenoxideinheiten vorliegen können. Geeignete derartige nichtionisch-hydrophile Aufbaukomponenten sind beispielsweise monofunktionelle Polyethylenglykolmonoalkylether mit Molekulargewichten von 350 bis 5 000 (z.B. ®Breox 350, 550, 750 von BP Chemicals) sowie monofunktionelle Verbindungen mit einem gegenüber Isocyanatgruppen reaktionsfähigen Wasserstoffatomen mit Ethylenoxid-Einheiten aufweisenden hydrophilen Ketten wie sie z.B. in der DE-A 2 651 506 beschrieben sind.

Auch als Komponente D) geeignete nichtionisch-hydrophile Aufbaukomponenten sind die in der DE-A 2 551 094 genannten Diisocyanate und/oder im Sinne der Isocyanatpolyaditionsreaktion difunktionelle Verbindungen mit gegenüber Isocyanatgruppen reaktionsfähigen Wasserstoffatomen mit seitenständigen Ethylenoxid-Einheiten aufweisenden hydrophilen Ketten.

Bei der gegebenenfalls mitzuverwendenden Komponente E) handelt es sich um sonstige di- tri- und/oder tetrafunktionelle Substanzen des Molekulargewichts 62 bis 250 mit Hydroxylgruppen wie z.B. Ethylenglykol, Propylenglykol, 1,4-Butandiol, 1,6-Hexandiol, Glycerin, Trimethylolpropan, Trimethylolethan, die isomeren Hexantriole oder Pentaerythrit.

Bei der gegebenenfalls mitzuverwendenden Komponente F) handelt es sich um di-, tri und/oder tetrafunktionelle Substanzen des Molekulargewichtsbereichs 60 bis 300 mit Aminogruppen wie z.B. Ethylendiamin, 1,2- und 1,3-Diaminopropan, 1,6-Diaminohexan, 1,3-Diamino-2,2-dimethylpropan, Isophorondiamin, 1,3- und 1,4-Diaminohexan, 4,4'-Diamino-dicyclohexylmethan, 2,4- und/oder 2,6-Diamino-1-methyl-cyclohexan, 4,4'-Diamino-3,31-dimethyl-dicyclohexylmethan, 1,4-Bis(2-amino-prop-2-yl)-cyclohexan oder 3,3'-Dimethyl-4,4'-diamino-dicyclohexylmethan oder auch Hydrazin, Hydrazide bzw. beliebige Gemische derartiger Diamine und Hydrazine; höherfunktionelle Polyamine wie Diethylentriamin, Triethylentetramin, Dipropylentriamin, Tripropylentetramin, hydrierte Anlagerungsprodukte von Acrylnitril an aliphatische oder cycloaliphatische Diamine, vorzugsweise entsprechender Anlagerungsverbindungen einer Acrylnitrilgruppe an ein Molekül eines Diamins, z.B. Hexamethylenpropylen-triamin, Tetramethylenpropylentriamin, Isophoron-propylen-triamin, 1,4- oder 1,3-Cyclohexanpropylentriamin oder beliebige Gemische derartiger Polyamine.

Zu den gegebenenfalls mitzuverwendenden Aufbaukomponenten G) gehören Ethylenoxideinheiten-freie, im Sinne der Isocyanatpolyadditionsreaktion monofunktionelle Verbindungen mit gegenüber Isocyanatgruppen reaktionsfähigen Gruppen, wobei hier unter "im Sinne der Isocyanatadditionsreaktion monofunktionell" auch solche Verbindungen verstanden werden sollen, die zwar theoretisch mehr als eine gegenüber Isocyanatgruppen reaktionsfähige Gruppen aufweisen, wobei jedoch eine dieser Gruppen eine deutlich höhere Reaktivität gegenüber Isocyanatgruppen aufweist als die anderen, so daß die Verbindungen in erster Näherung selektiv wie eine monofunktionelle Verbindung reagieren.

Geeignete Aufbaukomponenten G) sind Ammoniak oder einwertige Amine des Molekulargewichtsbereichs 31 bis 200 wie z.B. Methyl-, Ethyl-, n-Propyl, Isopropylamin, Cyclohexylamin, Cyclooctylamin, Diethylamin, Aminoalkohole wie Ethanolamin, Diethanolamin oder Propanolamin.

Die letztgenannten Hydroxylgruppen aufweisenden Aminoalkohole gehören zu den obengenannten Verbindungen mit zwei gegenüber Isocyanatgruppen reaktionsfähigen Gruppen, die jedoch in erster Näherung wie monofunktionelle Verbindungen reagieren.

Die Aufbaukomponenten G) werden gegebenenfalls mitverwendet, um einen evtl. Kettenabbruch zu erreichen.

Die Herstellung der Polyharnstoffpolyurethane aus den Ausgangskomponenten A) bis G) erfolgt in an sich bekannter Weise ein- oder mehrstufig, wobei die Mengenverhältnisse der Reaktionspartner so gewählt werden, daß das Äquivalentverhältnis von Isocyanatgruppen der Komponente B) zu gegenüber Isocyanaten reaktionsfähigen Gruppen der Komponente A), C) D), E), F) und G) bei 0,8:1 bis 2:1, vorzugsweise 0,95:1, bis 1,5:1 und insbesondere bei 0,95:1 bis 1,2:1.

In die Berechnung dieses Äquivalentverhältnisses gehen weder die Carboxylgruppe der Komponente C) noch das zur Herstellung von Lösungen oder Dispersionen der Polyurethane verwendete Wasser noch das zur Neutralisation der poteniell ionischen Gruppen eingesetzte Neutralisationsmittel ein.

Die Komponente D) gelangt in einer solchen Menge zum Einsatz, daß in den letztendlich erhaltenen erfindungsgemäßen Polyurethanen 0 bis 30, vorzugsweise 1 bis 20 Gew.-% an innerhalb von Polyetherketten eingebauten Ethylenoxideinheiten vorliegen.

Die Menge der Komponente C) und der Neutralisationsgrad der mit der Komponente C) eingebauten (potentiell) ionischen Gruppen wird so bemessen, daß in dem letztendlich erhaltenen Polyurethan 0,1 bis 120, vorzugsweise 1 bis 80 Milliäquivalente pro 100 g Feststoff an Carboxylatgruppen vorliegen, wobei die Gesamtmenge der zuletzt genannten Ethylenoxideinheiten und dieser Carboxylatgruppen innerhalb der genannten Bereiche so bemessen sein muß, daß die Löslichkeit bzw. Dispergierbarkeit der Polyurethane in Wasser gewährleistet ist.

Im übrigen werden Art und Mengenverhältnisse der Ausgangskomponenten A) bis F) so bemessen, daß nach erfolgter Umsetzung dieser Ausgangsmaterialien in den resultierenden Polyurethanen maximal bis zu 10, vorzugsweise bis maximal 5 Gew.-%, bezogen auf Festkörper, an freien, nicht umgesetzten Isocyanatgruppen vorliegen.

Die gegebenenfalls mitzuverwendenden monofunktionellen Aufbaukomponenten G) werden vorzugsweise bis zu einer solchen Menge mitverwendet, die der Menge der theoretisch gegebenenfalls nach der Umsetzung der Ausgangskomponenten A) bis F) noch vorliegenden freien Isocyanatgruppen entspricht.

Die Umsetzung der Ausgangskomponenten A) bis G) kann sowohl ein- als auch mehrstufig durchgeführt werden. Selbstverständlich kann auch ein gegenüber Isocyanatgruppen inertes, mit Wasser mischbares Lösungsmittel mitverwendet werden, so daß die Umsetzungsprodukte letztendlich in Form einer Lösung in einem derartigen Lösungsmittel vorliegen.

In diesem Zusammenhang bedeutet "Lösung" sowohl eine echte Lösung als auch eine Wasser-in-Öl-Emulsion, die dann entstehen kann, wenn beispielsweise einzelne der Aufbaukomponente in Form von wäßrigen Lösungen zum Einsatz gelangen.

Geeignete Lösungsmittel sind beispielsweise Aceton, Methylethylketon, N-Methylpyrrolidon oder beliebige Gemische derartiger Lösungsmittel. Die Menge dieser Lösungsmittel wird im allgemeinen so bemessen, daß mindestens 10 gew.-%ige Lösungen der Umsetzungsprodukte aus den Ausgangskomponenten A) bis G) in dem Lösungsmittel anfallen. Bevorzugt werden Lösungemittel verwendet, die genügend flüchtig sind, um abdestilliert zu werden.

Es ist ja gerade ein Vorteil, daß die erfindungsgemäßen Polyurethane ohne Zusatz von die Verfilmung fördernde Stoffe wie organischen Lösungsmitteln die erwähnten harten Beschichtungen bei unterhalb von Raumtemperatur liegender Filmbildungstemperatur liefern.

Die Herstellung der erfindungsgemäßen Polyharnstoffpolyurethane erfolgt in Abwesenheit der Gegenwart von Katalysatoren. Gelangen Katalysatoren zum Einsatz, so sind dies die in der Polyurethanchemie üblicherweise verwendeten Katalysatoren wie z.B. tertiäre Amine wie z.B. Triethylamin, Zinnverbindungen wie z.B. Zinn-II-octoat, Dibutylzinnoxid, Dibutylzinndilaurat und andere gebräuchliche Katalysatoren.

Zur Herstellung der erfindungsgemäßen Polyurethanpolyharnstoff-Dispersionen bzw. -Lösungen eignen sich die in der Literatur beschriebenen Herstellungsverfahren. (D. Dietrich in: Houben-Weyl, Methoden der organ. Chemie, 4. Aufl. Band E 20, S. 1650 (1987), beispielsweise das Prepolymer-Misch-Verfahren, das Aceton-Verfahren sowie das Ketimin/Ketazin-Verfahren.

Enthält die potentiell ionische Komponente C) Carboxylgruppen, so kann die Zugabe bis zur zumindest teilweisen Neutralisation der Carboxylgruppen erforderlichen Base vor, während oder im Anschluß an die Wasserzugabe erfolgen. Falls die gegebenenfalls in organischer Lösung gelöst vorliegenden Umsetzungsprodukte aus den Ausgangskomponenten A) bis G) noch freie Isocyanatgruppen aufweisen und falls die Zugabe der Base vor oder gleichzeitig mit der Zugabe von Wasser, beispielsweise des Dispergierwassers erfolgt (so daß die freien Isocyanatgruppen keine Gelegenheit haben mit dem Dispergierwasser abzureagieren), muß die Menge der Base im Falle isocyanatreaktiver Basen so bemessen werden, daß sie nicht nur zur Erreichung des gewünschten Neutralisationsgrades, sondern auch zur "Neutralisation" der noch vorliegenden freien Isocyanatgruppen unter Kettenabbruch ausreicht. Der Gehalt an freien Isocyanatgruppen der in den oben beschriebenen Lösungen vorliegenden Umsetzungsprodukten aus A) bis G) liegt bei 0 bis 10, vorzugsweise 0 bis 5 Gew.-%, bezogen auf Feststoff.

Geeignete Basen sind z.B. Ammoniak, N-Methylmorpholin, Dimethylisopropanolamin, Triethylamin, Dimethylethanolamin, Methyldiethanolamin, Triethanolamin, Morpholin, Tripropylamin, Ethanolamin, Triisopropanolamin, 2-Diethylamino-2-methyl-1-propanol bzw. Gemische dieser und anderer Neutralisationsmittel. Ebenfalls geeignet als Neutralisationsmittel sind Natriumhydroxid, Lithiumhydroxid und Kaliumhydroxid. Bevorzugte Neutralisationsmittel sind Ammoniak und Dimethylethanolamin.

Wird als Komponente C) eine potentiell kationische Verbindung der genannten Art eingesetzt, so gilt die oben für die Basenzugabe geschilderte Vorgehensweise hier entsprechend für Säuren.

Geeignete Säure sind z.B. die in der DE-A 2 651 505 bzw. in der DE-A 2 019 324 erwähnten bzw. zitierten Verbindungen.

Erfolgt die Überführung einer potentiell kationschen Komponente C) in die ionische Form durch Quaternierung, so ist die Vorgehensweise analog zu der in der DE-A 2 651 505 beschriebenen Art. Quaternierungsmittel sind ebenfalls der DE-A 2 651 505 zu entnehmen, beispielsweise Dimethylsulfat oder Chloracetamid.

Im Anschluß an die Zugabe des als Lösungsmittel bzw. als Dispergiermedium dienendem Wassers, dessen Menge im übrigen so bemessen wird, daß 10- bis 60-, vorzugsweise 20- bis 45 gew.-%ige Lösungen oder Dispersionen resultieren, erfolgt gegebenenfalls eine destillative Entfernung zumindest der Hauptmenge des verwendeten Hilfslösungsmittels.

Letztendlich werden somit die erfindungsgemäßen Polyurethane in Form von wäßrigen Lösungen oder in Form von wäßrigen Dispersionen, bei denen der mittlere Teilchendurchmesser bei ca. 10 bis 1 000 nm, vorzugsweise bei 30 bis 500 nm liegt, erhalten.

Es können auch ohne weiteres höhere Mengen an tri- und polyfunktionellen Aufbaukomponenten, insbesondere Vernetzungsmitteln E) und/oder F) mitverwendet werden, so daß nicht nur Polyurethane mit im wesentlichen linearer Struktur, sonderen auch stark verzweigte Polyurethane erhalten werden können.

Die wäßrigen Lösungen und Dispersionen der erfindungsgemäßen Polyurethane sind frost- und lagerstabil und mit Wasser beliebig verdünnbar. Im Falle des Vorliegens von endständigen Harnstoffgruppen (Umsetzung von endständigen Isocyanatgruppen mit Ammoniak) weisen die Polyurethane Reaktivzentren auf, die ohne Schwierigkeiten für Vernetzungsreaktionen herangezogen werden können. So ist es beispielsweise möglich, endständige Harnstoffgruppen mit Formaldehyd in Methylolgruppen zu überführen, die dann mit geeigneten Vernetzern, beispielsweise mit Melaminharzen unter Vernetzung abreagieren.

Die Lösungen bzw. Dispersionen der erfindungsgemäßen Polyurethane können zu einem beliebigen Zeitpunkt nach ihrer Herstellung formgebend verarbeitet werden. Sie trocknen im allgemeinen unmittelbar zu formstabilen Kunststoffüberzügen auf.

Je nach der gewählten chemischen Zusammensetzung und dem Gehalt an Urethanund Harnstoffgruppen erhält man Polyurethane mit unterschiedlichen Eigenschaften. So können Produkte verschiedener Härtegrade hergestellt werden. Die erfindungsgemäßen Polyharnstoff-Polyurethane eignen sich vorzugsweise zur Herstellung harter Produkte bei gleichzeitig niedriger Mindestfilmbildungstemperatur. Die Hydrophilie der Produkte kann ebenfalls in gewissen Grenzen schwanken.

Die erfindungsgemäßen Produkte sind zur Beschichtung bzw. Lackierungen beliebiger Substrate, insbesondere Holz, Metallen, Keramik, Stein, Beton, Bitumen, Hartfaser, Glas, Porzellan, Kunststoffen der verschiedensten Art geeignet. Weiterhin sind sie einsetzbar als Finish oder Appretur bei der Textil- und Lederbeschichtung. Besonders bevorzugte Einsatzgebiete sind solche, bei denen es nach Trocknung bei Raumtemperatur oder leicht erhöhter Temperatur auf hohe Härte des Überzugs ankommt, wie z.B. die Lackierung im Baubereich (Beton, Parkett usw.), die Holz/Möbellackierung, Autoreparaturlackierung und die Lackierung bestimmter Kunststoffe.

Die Dispersionen können mit anderen ionischen oder nichtionischen Dispersionen verschnitten werden, z.B. mit Polyvinylacetat, Polyethylen, Polystyrol, Polybutadien-, Polyvinylchlorid-, Polyacrylat- und Copolymerisat-Kunststoff-Dispersionen. Auch der Zusatz von an sich bekannten chemisch nicht fixierten, vorzugsweise ionischen Emulgatoren ist möglich.

Zur erfindungsgemäßen Verwendung der erfindungsgemäßen Dispersionen können diesen die üblichen Hilfs- und Zusatzmittel zugesetzt werden. Hierzu gehören beispielsweise Vernetzungsmittel wie Carbodiimide, blockierte Polyisocyanate, sowie teilweise oder ganz veretherte Melaminharze, Pigmente, Metallic-Pigmente auf der Basis von Aluminiumflocken; Füllstofe wie beispielsweise Ruß, Kieselsäure, Talkum, Kaolin, Titandioxid, Glas oder Pulver oder in Form von Fasern, Cellulose oder Cellulose-aceto-butyrat.

Die Verarbeitung der Dispersionen zur Herstellung von Überzügen nach beliebigen Methoden, beispielsweise durch Streichen, Gießen, Sprühen, Tauchen, Walzen. oder Rakeln, erfolgen.

Die Trocknung der nach verschiedenen Applikationstechniken erhaltenen Produkte kann bei Raumtemperatur oder bei erhöhter Temperatur bis 200°C erfolgen.

### Beispiele

In den nachfolgenden Beispielen beziehen sich alle Prozentangaben auf Gewichtsprozente. Alle Angaben in "Teilen" beziehen sich auf Gewichtsteile.

### Beispiel 1

153 Teile eines Polyesters aus Adipinsäure sowie Hexandiol-1,6 und 2,2-Dimethylpropandiol-1,3 (im Molverhältnis 0,65:0,35) der OH-Zahl 66 werden mit 231 Teilen eines Polyesters aus Adipinsäure und Hexandiol-1,6 der OH-Zahl 133, 45 Teilen eines monofunktionellen Polyetheralkohols der OH-Zahl 26 (hergestellt durch Alkoxylierung von n-Butanol unter Verwendung eines Gemisches aus 83 % Ethylenoxid und 17 % Propylenoxid) und 53,6 Teilen 2,2-Dimethylolpropionsäure vermischt, bei 65°C mit 396 Teilen eines Gemisches aus 80 % 1-Methyl-2,4-diisocyanatocyclohexan und 20 % 1-Methyl-2,6-diisocyanatocyclohexan ("H₆TDI") versetzt und bei 75°C so lange umgesetzt, bis der NCO-Gehalt des resultierenden NCO-Propolymeren auf 14,6 % gefallen ist.

Man kühlt auf 65°C ab, gibt 33,75 Teile Butandiol-1,4 und 13,4 Teile Trimethylolpropan zu und rührt bei 75°C, bis der NCO-Gehalt der Mischung auf 8,0 % gefallen ist. Das entstandene Prepolymer wird in 2 000 Teilen Aceton gelöst.

Bei 40°C wird eine Lösung vom 42,0 Teilen Ethylendiamin und 19,1 Teilen 25 %iger Ammoniak-Lösung in 560 Teilen entionisiertem Wasser zugegeben und nachgerührt. Dann gießt man noch 14,3 Teile einer 25 %igen wäßrigen Ammoniak-Lösung zu.

Zur Dispergierung läßt man unter starken Rühren 1 222 Teile entmineralisiertes Wasser zulaufen. Das Aceton wird nun im Vakuum abdestilliert. Nach Erreichen eines Acetongehalts von <1 % wird die Dispersion auf einen Feststoffgehalt von 35 % eingestellt.

| | |
|---|---|
| Auslaufzeit (4mm-Düse). | 40 sec. |
| pH-Wert: | 6,95 |

### Beispiel 2

### (Vergleichsbeispiel)

153 Teile eines Polyesters aus Adipinsäure sowie Hexandiol-1,6 und 2,2-Dimethylpropandiol-1,3 (im Molverhältnis 0,65:0,35) der OH-Zahl 66 werden mit 231 Teilen eines Polyesters aus Adipinsäure und Hexandiol-1,6 der OH-Zahl 133, 45 Teilen eines monofunktionellen Polyetheralkohols der OH-Zahl 26 (hergestellt durch Alkoxylierung von n-Butanol unter Verwendung eines Gemisches aus 83 % Ethylenoxid und 17 % Propylenoxid) und 53,6 Teilen 2,2-Dimethylolpropionsäure vermischt und bei 75°C mit 488,4 Teilen 3-Isocyanatomethyl-3,5,5-trimethylcyclohexylisocyanat (IPDI) so lange umgesetzt, bis der NCO-Gehalt des resultierenden NCO-Propolymeren auf 13,6 % gefallen ist.

Man kühlt auf 65°C ab, gibt 33,75 Teile Butandiol-1,4 und 13,4 Teile Trimethylolpropan zu und rührt bei 75°C, bis der NCO-Gehalt der Mischung auf 7,4 % gefallen ist. Das entstandene Prepolymer wird in 2 000 Teilen Aceton gelöst.

Bei 40°C wird eine Lösung vom 42,0 Teilen Ethylendiamin und 19,1 Teilen 25 %iger Ammoniak-Lösung in 560 Teilen entionisiertem Wasser zugegeben und nachgerührt. Dann gießt man noch 14,3 Teile einer 25 %igen wäßrigen Ammoniak-Lösung zu.

Zur Dispergierung läßt man unter starken Rühren 1 400 Teile entmineralisiertes Wasser zulaufen. Das Aceton wird nun im Vakuum abdestilliert. Nach Erreichen eines Acetongehalts von <1 % wird die Dispersion auf einen Feststoffgehalt von 35 % eingestellt.

| | |
|---|---|
| Auslaufzeit (4mm-Düse). | 20 sec. |
| pH-Wert: | 7,5 |

### Beispiel 3

Auf Basis der in den Beispielen 1 und 2 beschriebenen PUR-Dispersionen wurden mattierte Klarlacke folgender Zusammensetzung formuliert:

| | |
|---|---|
| 75,0 Teile | PUR-Dispersionen gemäß Beispiel 1 bzw. 2 |
| 0,9 Teile | BYK 348®; Untergrundbenetzungsmittel (Silikontensid), Fa. Byk-Chemie GmbH, Wesel |
| 0,5 Teile | BYK 380®; Verlaufmittel, Fa. Byk-Chemie GmbH, Wesel |
| 0,1 Teile | BYK 023®; Entlüftungsmittel, Fa. Byk-Chemie GmbH, Wesel |
| 23,5 Teile | Acrysol ASE 60®; Verdickungsmittel zur Verbesserung der Verarbeitbarkeit (Acrylat-Copolymer) Fa. Rohm und Haas Deutschland GmbH, Frankfurt |

Ferner wurden mattierte Klarlacke hergestellt, die bezogen auf die oben angegebene Formulierung zusätzlich 5 Teile Methoxypropanol enthalten. Der Zusatz von Methoxypropanol bewirkt bei dem Produkt hoher Mindestfilmbildungstemperatur eine Absenkung der Mindestfilmbildungstemperatur unter Beibehaltung der übrigen lacktechnischen Eigenschaften.

An Lackfilmen mit 40 µm Trockenfilmstärle wurden folgende Prüfergebnisse ermittel:

**Tabelle 1**

| | Pendelhärte nach König [s]^{[a]} nach 7 Tagen | Mindestfilmbildungs-Temperatur [°C]^{[b]} |
|---|---|---|
| PUR-Dispersion gemäß Beispiel 1 (erfindungsgemäß) | 151 | 4 |
| PUR-Dispersion gemäß Beispiel 1 (erfindungsgemäß) + 5 % Methoxypropanol | 150 | 2 |
| PUR-Dispersion gemäß Beispiel 2 (Vergleichsbeispiel) | (keine Filmbildung bei Raumtemperatur) | 25 |
| PUR-Dispersion gemäß Beispiel 2 (Vergleichsbeispiel) + 5 % Methoxypropanol | 154 | 12 |

| | | |
|---|---|---|
| ^{[a]} Bestimmung gemäß DIN 35157 | | |
| ^{[b]} Die Mindestfilmbildungstemperatur wurde nach DIN 53 787 bestimmt. | | |

### Zusammenfassung der Ergebnisse

Die Tabelle 1 zeigt, daß auf Basis von PUR-Dispersionen, die H₆TDI als Isocyanatkomponente enthalten, harte Lackfilme bei gleichzeitig niedriger Mindestfilmbildungstemperatur erhalten werden.

Dahingegen zeigt die PUR-Dispersion auf Basis IPDI bei Raumtemperatur keine Filmbildung. Erst der Zusatz von Methoxypropanol senkt die Mindestfilmbildungstemperatur auf ca. 12°C ab.

Die Pendelhärten der Lackfilme auf Basis der PUR-Dispersionen gemäß Beispiel bzw. Vergleichsbeispiel sind praktisch identisch, der Zusatz von Methoxypropanol beeinflußt die Pendelhärte wie gezeigt nicht, ist aber unter Umweltgesichtspunkten unerwünscht.

## Patentansprüche

1. Wäßrige Polyurethanharnstoffdispersionen, die ohne Zusatz von Filmbildehilfsmitteln Filmbildungstemperaturen von ≤ 20°C aufweisen, bei Raumtemperatur zu Filmen mit einer Härte gemäß DIN 53 157 (Pendelhärte nach König) von ≥ 100 Sekunden trocknen und deren Festkörper 15-70 Gew.-% Struktureinheiten der Formel (I) 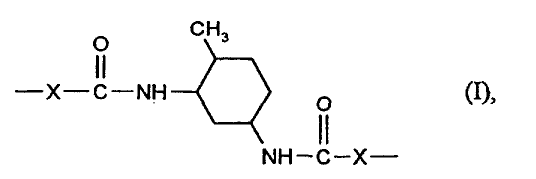 und/oder der Formel (II), 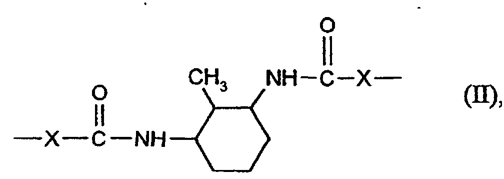 wobei -X- für -O- und/oder -NA- steht mit A = H oder -(CH₂)ₙ-B- mit B = H oder X und n = 2
und einen Gehalt an Urethangruppen (berechnet als -NH-CO-O-, Molekulargewicht 59) von 7 bis 20 Gew.-% sowie einen Gehalt an Harnstoffgruppen (berechnet als 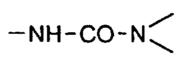 , Molekulargewicht 57) von 5 bis 18 Gew.-% aufweist,
enthält.

2. Wäßrige Polyurethanharnstoffdispersionen gemäß Anspruch 1, **dadurch gekennzeichnet, daß** das Polyharnstoffpolyurethan das zumindest teilweise in der Salzform vorliegende Umsetzungsprodukt darstellt von
A) 20 bis 60 Gew.-% einer Polyisocyanat-Komponente, bestehend zumindest zu 50 Gew.-% aus 1-Methyl-2,4- und/oder -2,6-diisocyanatocyclohexan und gegebenenfalls zum Rest aus anderen organischen Polyisocyanaten des Molekulargewichtsbereiches 140 bis 1 500 mit
B) 20 bis 60 Gew.-% einer Polyolkomponente, bestehend aus einem oder verschiedenen Polyolen des Hydroxylzahlbereichs 25 bis 350
und
C) 2 bis 12 Gew.-% einer (potentiell) ionischen Aufbaukomponente aus mindestens einer Verbindung mit mindestens einer gegenüber NCO-Gruppen reaktionsfähigen Gruppe und mindestens einer, gegebenenfalls zumindestens teilweise neutralisiert vorliegenden, zur Salzbildung befähigten Gruppe und gegebenenfalls
D) 0 bis 12 Gew.-% einer nichtionisch-hydrophilen Aufbaukomponente, bestehend aus mindestens einer im Sinne der Isocyanat-Additionsreaktion mono- oder difunktionellen, mindestens eine hydrophile Polyetherkette aufweisenden Verbindung
und/oder
E) 0 bis 15 Gew.-% eines oder mehrerer mehrwertiger Alkohole mit 2 bis 4 Hydroxylgruppen, Molekulargewichtsbereich 62 bis 250
und/oder
F) 0 bis 15 Gew.-% eines oder mehrerer (cyclo)aliphatischer Polyamine mit 2 bis 3 Aminogruppen, Molekulargewichtsbereich 60 bis 300,
und/oder
G) 0 bis 10 Gew.-% kettenabbrechender Verbindungen, ausgewählt aus der Gruppe der Monoamine, Alkanolamine und Ammoniak,
wobei sich die genannten Prozentangaben zu 100 ergänzen.

3. Verfahren zur Herstellung von wäßrigen Polyurethanharnstoffdisperionen gemäß Anspruch 1, **dadurch gekennzeichnet, daß** man
A) 20 bis 60 Gew.-% einer Polyisocyanat-Komponente, bestehend zumindest zu 50 Gew.-% aus 1-Methyl-2,4- und/oder -2,6-diisocyanatocyclohexan und gegebenenfalls zum Rest aus anderen organischen Polyisocyanaten des Molekulargewichtsbereiches 140 bis 1 500 mit
B) 20 bis 60 Gew.-% einer Polyolkomponente, bestehend aus einem oder verschiedenen Polyolen des Hydroxylzahlbereichs 25 bis 350
und
C) 2 bis 12 Gew.-% einer (potentiell) ionischen Aufbaukomponente aus mindestens einer Verbindung mit mindestens einer gegenüber NCO-Gruppen reaktionsfähigen Gruppe und mindestens einer, gegebenenfalls zumindestens teilweise neutralisiert vorliegenden, zur Salzbildung befähigten Gruppe und gegebenenfalls
D) 0 bis 12 Gew.-% einer nichtionisch-hydrophilen Aufbaukomponente, bestehend aus mindestens einer im Sinne der Isocyanat-Additionsreaktion mono- oder difunktionellen, mindestens eine hydrophile Polyetherkette aufweisenden Verbindung
und/oder
E) 0 bis 15 Gew.-% eines oder mehrerer mehrwertiger Alkohole mit 2 bis 4 Hydroxylgruppen, Molekulargewichtsbereich 62 bis 250
und/oder
F) 0 bis 15 Gew.-% eines oder mehrerer (cyclo)aliphatischer Polyamine mit 2 bis 3 Aminogruppen, Molekulargewichtsbereich 60 bis 300,
und/oder
G) 0 bis 10 Gew.-% kettenabbrechender Verbindungen, ausgewählt aus der Gruppe der Monoamine, Alkanolamine und Ammoniak
zur Reaktion bringt, wobei sich die genannten Prozentangaben zu 100 ergänzen.

4. Verwendung der wäßrigen Dispersionen gemäß Anspruch 1 zur Herstellung von Lacken und Beschichtungen auf beliebigen Substraten.

5. Lack enthaltend wäßrige Dispersionen gemäß Anspruch 1.

## Claims

1. Aqueous polyurethaneurea dispersions which have film forming temperatures of ≤ 20°C without the addition of film forming auxiliaries, dry at room temperature to yield films having a hardness to DIN 53 157 (König pendulum hardness) of ≥ 100 seconds and the solids content of which contains 15-70 wt.% of structural units of the formula (I) 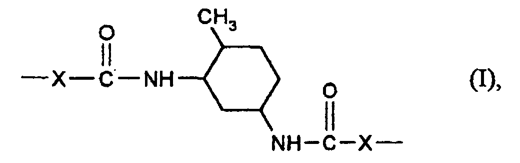 and/or of the formula (II) 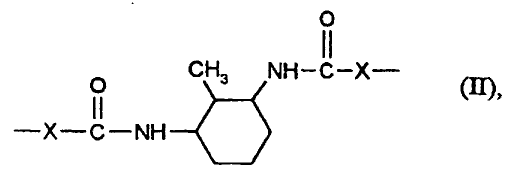 wherein -X- denotes -O- and/or -NA- with A = H or -(CH₂)ₙ-B- with B = H or X and n = 2
and has a content of urethane groups (calculated as -NH-CO-O-, molecular weight 59) of 7 to 20 wt.%, together with a content of urea groups (calculated as 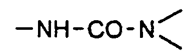 , molecular weight 57) of 5 to 18 wt.%.

2. Aqueous polyurethaneurea dispersions according to claim 1, **characterised in that** the polyureapolyurethane constitutes the reaction product present at least partially in salt form of
A) 20 to 60 wt.% of a polyisocyanate component consisting to an extent of at least 50 wt.% of 1-methyl-2,4- and/or -2,6-diisocyanatocyclohexane and the remainder optionally consisting of other organic polyisocyanates of the molecular weight range from 140 to 1500 with
B) 20 to 60 wt.% of a polyol component consisting of one or various polyols of the hydroxyl value range from 25 to 350
and
C) 2 to 12 wt.% of a (potentially) ionic structural component consisting of at least one compound having at least one group reactive towards NCO groups and at least one, optionally at least partially neutralised, group capable of salt formation and optionally
D) 0 to 12 wt.% of a nonionic hydrophilic structural component consisting of at least one compound which is mono- or difunctional for the purposes of the isocyanate addition reaction and contains at least one hydrophilic polyether chain
and/or
E) 0 to 15 wt.% of one or more polyhydric alcohols having 2 to 4 hydroxyl groups, molecular weight range 62 to 250
and/or
F) 0 to 15 wt.% of one or more (cyclo)aliphatic polyamines having 2 to 3 amino groups, molecular weight range 60 to 300,
and/or
G) 0 to 10 wt.% of chain-terminating compounds selected from the group comprising monoamines, alkanolamines and ammonia,
wherein the stated percentages add up to 100.

3. A process for the production of aqueous polyurethaneurea dispersions according to claim 1, **characterised in that**
A) 20 to 60 wt.% of a polyisocyanate component consisting to an extent of at least 50 wt.% of 1-methyl-2,4- and/or -2,6-diisocyanatocyclohexane and the remainder optionally consisting of other organic polyisocyanates of the molecular weight range from 140 to 1500 are reacted with
B) 20 to 60 wt.% of a polyol component consisting of one or various polyols of the hydroxyl value range from 25 to 350
and
C) 2 to 12 wt.% of a (potentially) ionic structural component consisting of at least one compound having at least one group reactive towards NCO groups and at least one, optionally at least partially neutralised, group capable of salt formation and optionally
D) 0 to 12 wt.% of a nonionic hydrophilic structural component consisting of at least one compound which is mono- or difunctional for the purposes of the isocyanate addition reaction and contains at least one hydrophilic polyether chain
and/or
E) 0 to 15 wt.% of one or more polyhydric alcohols having 2 to 4 hydroxyl groups, molecular weight range 62 to 250
and/or
F) 0 to 15 wt.% of one or more (cyclo)aliphatic polyamines having 2 to 3 amino groups, molecular weight range 60 to 300,
and/or
G) 0 to 10 wt.% of chain-terminating compounds selected from the group comprising monoamines, alkanolamines and ammonia,
wherein the stated percentages add up to 100.

4. Use of the aqueous dispersions according to claim 1 for the production of lacquers and coatings on any desired substrates.

5. A lacquer containing an aqueous dispersion according to claim 1.

## Revendications

1. Dispersions aqueuses de polyuréthanne-urées ayant, sans adjonction de produits auxiliaires filmogènes, des températures de formation de film inférieures ou égales à 20°C, séchant à température ambiante en pellicules à une dureté selon norme allemande DIN 53157 (dureté au pendule selon König) supérieure ou égale à 100 s et dont les matières solides contiennent 15 à 70 % en poids de motifs de structure de formule (I) 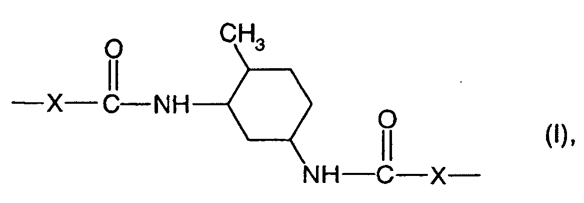 et/ou de formule (II) 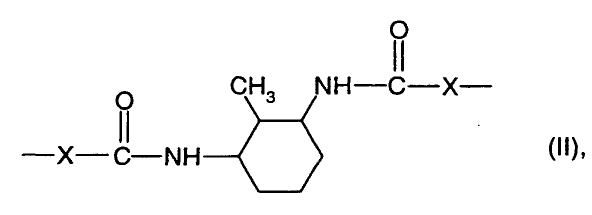 dans lesquelles -X- représente -O- et/ou -NA- avec A = H ou -(CH₂)ₙ-B- et B = H ou X et n = 2,
avec une teneur en groupes uréthanne (exprimée en -NH-CO-O-, poids moléculaire 59) de 7 à 20 % en poids et une teneur en groupes urée (exprimée en 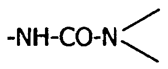 , poids moléculaire 57) de 5 à 18 % en poids.

2. Dispersions aqueuses de polyuréthanne-urées selon la revendication 1, **caractérisées en ce que** le polyurée-polyuréthanne est le produit de réaction, en partie au moins à l'état de sel, de
A) 20 à 60 % en poids d'un composant polyisocyanate consistant pour au moins 50 % en poids en le 1-méthyl-2,4- et/ou -2,6-diisocyanatocyclohexane et le cas échéant, pour le solde, en d'autres polyisocyanates organiques de poids moléculaire 140 à 1500, avec
B) 20 à 60 % en poids d'un composant polyol consistant en un ou plusieurs polyols d'indice d'hydroxyle 25 à 350
et
C) 2 à 12 % en poids d'un composant de synthèse ionique (potentiel) consistant en au moins un composé à au moins un groupe réactif avec les groupes NCO et au moins un groupe salifiable, le cas échéant à l'état neutralisé en partie au moins, et le cas échéant
D) 0 à 12 % en poids d'un composant de synthèse non ionique-hydrophile consistant en au moins un composé mono- ou difonctionnel au sens de la réaction d'addition des isocyanates, et qui contient au moins une chaîne polyéther hydrophile,
et/ou
E) 0 à 15 % en poids d'un ou plusieurs alcools polyvalents contenant 2 à 4 groupes hydroxy, de poids moléculaire 62 à 250
et/ou
F) 0 à 15 % en poids d'une ou plusieurs polyamines (cyclo)aliphatiques contenant 2 à 3 groupes amino et de poids moléculaire 60 à 300,
et/ou
G) 0 à 10 % en poids de composés coupeurs de chaînes choisis dans le groupe des monoamines, des alcanolamines et de l'ammoniac,
toutes ces indications de pourcentage se complétant à 100.

3. Procédé pour la préparation des dispersions aqueuses de polyuréthanne-urées selon la revendication 1, **caractérisé en ce que** l'on fait réagir
A) 20 à 60 % en poids d'un composant polyisocyanate consistant pour au moins 50 % en poids en 1-méthyl-2,4- et/ou -2,6-diisocyanatocyclohexane et le cas échéant, pour le solde, en d'autres polyisocyanates organiques de poids moléculaire 140 à 1500, avec
B) 20 à 60 % en poids d'un composant polyol consistant en un ou plusieurs polyols d'indice d'hydroxyle 25 à 350
et
C) 2 à 12 % en poids d'un composant de synthèse ionique (potentiel) consistant en au moins un composé à au moins un groupe réactif à l'égard des groupes isocyanate et au moins un groupe salifiable, éventuellement neutralisé en partie au moins, et le cas échéant
D) 0 à 12 % en poids d'un composant de synthèse non ionique-hydrophile consistant en au moins un composé mono- ou difonctionnel au sens de la réaction d'addition des isocyanates et contenant au moins une chaîne polyéther hydrophile,
et/ou
E) 0 à 15 % en poids d'un ou plusieurs alcools polyvalents contenant 2 à 4 groupes hydroxy, de poids moléculaire 62 à 250
et/ou
F) 0 à 15 % en poids d'une ou plusieurs polyamines (cyclo)aliphatiques contenant 2 à 3 groupes amino et de poids moléculaire 60 à 300,
et/ou
G) 0 à 10 % en poids de composés coupeurs de chaînes choisis dans le groupe des monoamines, des alcanolamines et de l'ammoniac,
tous ces pourcentages se complétant à 100.

4. Utilisation des dispersions aqueuses selon la revendication 1, pour la préparation de peintures et l'application de revêtements sur des supports quelconques.

5. Peinture contenant une dispersion aqueuse selon la revendication 1.
